# EUROPEAN PATENT SPECIFICATION

(11) **EP 0 482 719 B1**
(45) Date of publication and mention of the grant of the patent: **06.10.1993**
(21) Application number: 91202748.9
(22) Date of filing: 23.10.1991
(51) Int. Cl.: A01K 5/02

(54) **Animal feeding device with dispensing means operable by an animal**
Tierfütterungsgerät mit einer vom Tier betätigbaren Abgabevorrichtung
Dispositif pour l'alimentation d'aminaux avec distributeur commandé par l'animal

(30) Priority: 23.10.1990 NL 9002310
(43) Date of publication of application: 29.04.1992
(73) Proprietor: LAKA B.V., NL-7461 TR Rijssen (NL)
(72) Inventor: Langkamp, Jan Hendrik, NL-7461 TR Rijssen (NL)
(74) Representative: Smulders, Theodorus A.H.J., Ir.

(56) References cited:
- WO-A-88/02597
- FR-A- 2 071 444
- GB-A- 590 285
- GB-A- 812 017
- NL-C- 185 597

## Description

This invention relates to an animal feeding device with dispensing means operable by an animal, which device comprises a hopper for free-flowing feed such as feed in granular or powdered form, which hopper is arranged above a feeding trough and provided in its bottom surface with a discharge aperture with walls sloping towards said discharge aperture, as well as an element spaced below said discharge aperture, whose upper surface covers and overlaps the discharge aperture, above which element a substantially horizontally extending shaft is rotatably bearing-mounted, which shaft can be driven by an animal by means of a member connected to said shaft and extending beyond the hopper, a pushing member for pushing the feed from the element towards the feeding trough, said pushing element being mounted perpendicularly to said shaft and having in radial direction relative to the shaft a height which is substantially equal to the perpendicular distance between the shaft and the upper surface of the element.

Such a feeding device is known from Dutch patent specification 185597, where the shaft with pushing member is arranged adjacent and parallel to the back wall of the hopper. A lever has one end mounted perpendicularly to the shaft, while at its other end a rod-shaped member is mounted which extends substantially parallel to the shaft. The arrangement is such that when an animal, for instance by way of its snout, pushes the member upwards, the lever causes the shaft with pushing member to pivot, so that an amount of feed is pushed from the upper surface of the element arranged under the discharge aperture and falls into the feeding trough. When the animal subsequently releases the rod-shaped member, this member returns to its initial position in consequence of an idle stroke due to gravity and the pressure which the feed exerts on the pushing member, whereupon this member is ready again to be pushed up and thereby to cause a next amount of feed to fall into the feeding trough.

For a proper operation of this known device, it is important that during operation the lever can at all times make the required stroke to enable the pushing member to move an amount of feed. The bearing of the shaft must be fairly unsusceptible to contamination to ensure the automatic return of the lever to its initial position. A second problem may be caused by feed accumulating behind the pushing member after slipping under the pushing member while the latter is being pivoted by the animal, whereby the gap between the upper surface of the element and the lower edge of the pushing member is enlarged. This danger will be greater in the case of powdered feed than in the case of coarse feed.

The object of the invention is to render a feeding device of the type described in the preamble unsusceptible to the problems described hereinabove.

This is realized according to the invention in that the shaft, seen in top plan view, extends along a line dividing the discharge aperture into two substantially equal passages and is extended at one end with a member connecting thereto in L-shaped configuration, which member extends substantially vertically downwards and is to be pivoted to the left and to the right by an animal, the upper surface of the element terminating in two free edges substantially parallel to each other and to the shaft, from which edges feed can fall into the feeding trough. With these features it is accomplished that after pivoting the pushing member does not return to its previous position of its own accord, but is pushed back into it by the animal. Because, moreover, feed is disposed on opposite sides of the pushing member, each pivoting motion of the pushing member effected by the animal brings about the displacement of feed from the top surface of the element into the feeding trough. Thus, the animal must bring about the to-and-fro stroke, but it need not effect an idle stroke.

The pivoting range of the shaft with pushing member, and hence the amount of feed that is supplied with each stroke, can be set in a particularly simple but effective manner when, in accordance with a further embodiment of the invention, the shaft at its other end comprises a wing extending on opposite sides, which wing extends substantially horizontally when the L-shaped extension extends vertically downwards, a block being adjustably mounted above the wing, which block the wing parts extending to the left and the right of the shaft can come into contact with.

A further adjustment option, directed more at the type of feed used, can be obtained in accordance with a further embodiment of the invention, wherein the discharge aperture of the hopper comprises two opposite edges extending substantially parallel to the shaft and each being part of a plate forming an adjustable part of the bottom surface of the hopper. With these features, the free space between the discharge aperture and the upper surface of the element can be optimally adjusted to the operational conditions.

In the case where use is made of fine-grained or powdered feed, there may be a risk of bridging in the feed hopper, as a result of which the supply of feed is discontinued. This risk can be reduced by providing, in accordance with a further embodiment of the invention, pin-, plate-, strip-, or rod-shaped elements extending from the shaft into the interior of the hopper, which elements are fixedly connected to the shaft. These features permit advantageous use to be made of the fact that the shaft is in direct contact with the feed and the motion of the shaft can accordingly be used to prevent bridging in the area above the shaft.

If feed of a relatively high humidity is employed, for instance feed to which ground corn has been added, it may be preferable to take further steps to prevent bridging and clotting. To that end, it is proposed, and in accordance with a further embodiment of the invention, to arrange a substantially plate-shaped member within the hopper above the shaft, which member can be moved by an element which in turn can be operated by an animal, which element is coupled with the plate-shaped member and extends beyond the hopper. With such a plate-shaped member, a relatively intensive agitation can be produced in the hopper. This plate-shaped member can be realized in different manners.

Thus, in accordance with a further embodiment of the invention, it is possible that said element is the substantially downwardly extending L-shaped extension of the shaft, mentioned earlier, and the plate-shaped member is provided with apertures, is arranged substantially horizontally and is connected to the shaft by means of pin-, plate-, strip-, or rod-shaped elements. In that case, pivoting the shaft with pushing member will be accompanied by a simultaneous motion of the plate-shaped member, the feed present in the hopper thereby being shaken loose.

Another possible embodiment of the plate-shaped member is realized by designing the element mentioned earlier as a lever which can be displaced by an animal from an inoperative position, which lever is connected to a further shaft, bearing-mounted in the hopper, and is urged into the inoperative position by a spring force, the part of the lever to be operated by an animal being less accessible than the member driving the first shaft. In this case, the operation of the pushing member and the plate-shaped member are separate. This operation is based on the observation that when pivoting the pushing member no longer leads to the dispensation of feed, for instance as a result of bridging, the animal will seek further possibilities of operation and then find and operate the lever. Operation of the lever results in a disturbance of bridging or clotting by means of the plate-shaped member, whereupon normal supply of feed can take place again.

In order to disturb the formation of bridges, in accordance with a further embodiment of the invention, the plate-shaped member may be a plate which is arranged on, and in surface-to-surface contact with, a hopper bottom wall sloping towards the discharge aperture and can be shifted back and forth over this bottom wall by displacement of the lever. The movement of the plate disturbs on one side the coherence of an amount of material forming a bridge and thus disturbs the bridging process. Moreover, such a plate can close the aperture where the lever passes through the wall of the hopper.

A more intensive agitation of the feed disposed in the hopper can be accomplished if the plate-shaped member is a substantially horizontally extending apertured plate which is fixedly connected to the further shaft and is tilted together with the further shaft by displacing the lever. Agitation can optionally be further enhanced by pin-, plate-, strip-, or rod-shaped elements extending from the plate.

Naturally, it is also possible to further optimize the prevention of bridging by using, in accordance with a preferred embodiment of the invention, a plate-shaped member in the form of a plate which is disposed on, and in surface-to-surface contact with, the hopper bottom wall sloping towards the discharge aperture and can be shifted back and forth over this bottom wall by displacing the lever, as well as a plate-shaped member in the form of a substantially horizontally extending apertured plate which may or may not be provided with pin-, plate-, strip-, or rod-shaped elements, which plate is fixedly connected to the further shaft and is tilted together with the further shaft by displacing the lever.

If the operation of the means of preventing bridging and clotting is chosen to be separate from the normal use of the device, it is recommended, and in accordance with a further embodiment of the invention, that the lever be a lever that can be pushed up from the inoperative position by an animal, this lever being disposed substantially in the same plane as the first shaft with L-shaped extension, and that the further shaft extend transversely to the first shaft, the lever being extended beyond the further shaft and a spring member engaging the free end of said extension, said spring member at all times urging the lever towards its downward inoperative position, the other free end of the lever to be operated by an animal terminating some distance above the free end of the L-shaped extension and being provided at that point with a grip member extending transversely to the lever and substantially parallel to the further shaft.

With reference to the embodiments shown in the drawings, the feeding device according to the invention will now be further explained. In said drawings:
Fig. 1 is cross section of a feeding device according to the invention;
Fig. 2 is a top plan view of the feeding device according to Fig.1;
Fig. 3 is a section taken on line III-III of Fig. 1; and
Fig. 4 schematically shows a modified embodiment of the feeding device according to Fig. 1.

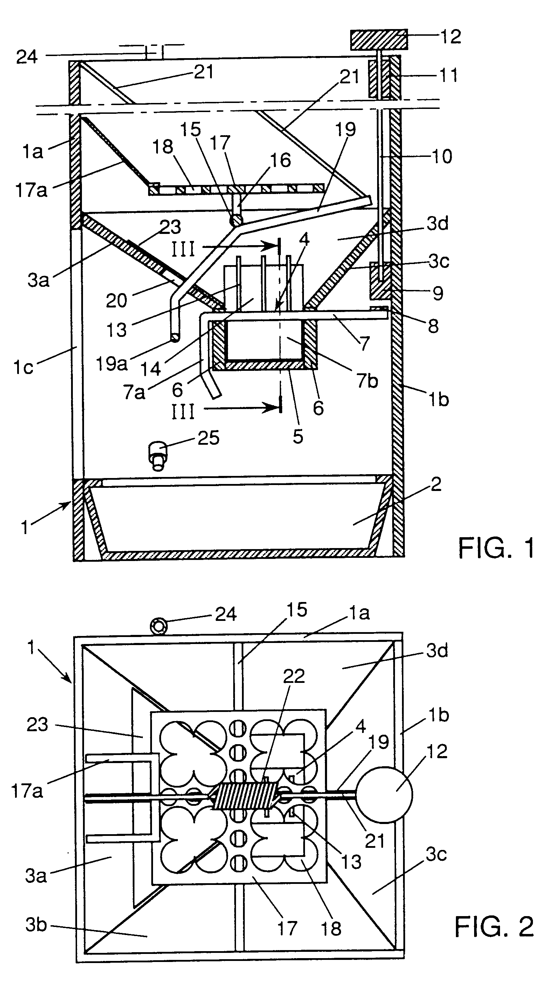

Figs 1 and 2 show a feeding device comprising a U-section member 1a and a plate member 1b closing this U-section member between the free ends of the legs thereof, so that a square tubular housing 1 is obtained. Provided in the web portion of the U-section member 1a is a recess 1c, permitting access to the head of an animal. At the bottom, the tubular housing 1 is closed by a feeding trough 2 whose top is in register with the lower edge of the recess 1c. By means of intermediate walls 3a-3d, an intermediate bottom is arranged in the housing 1, which intermediate bottom forms the bottom surface of a hopper for feed which is further defined by the wall portions of the housing 1 that are disposed above the intermediate bottom 3a-3d.

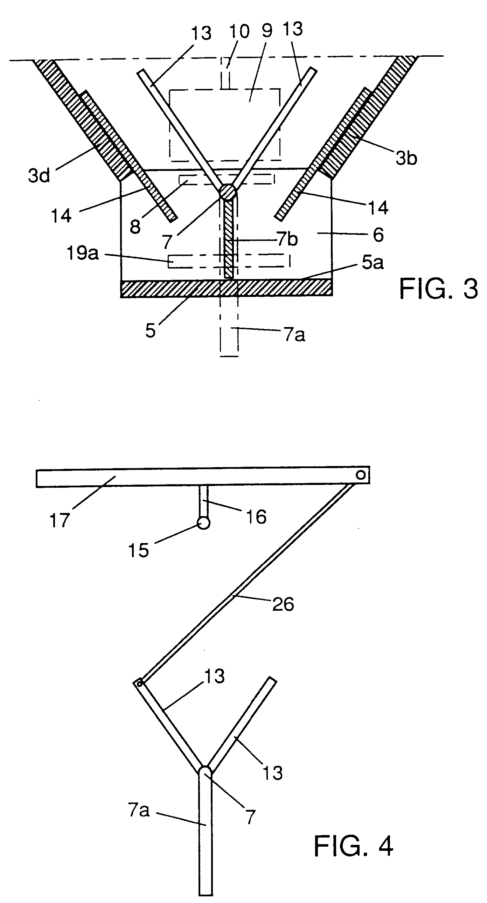

Intermediate walls 3a-3d all slope down towards the middle of the housing 1, a discharge aperture 4 being provided at the meeting point of the four intermediate walls. Arranged at a distance below the discharge aperture 4 is a plate-shaped element 5 having a horizontal upper surface 5a (see also Fig. 3), retained in position by two plate-shaped members 6, each joining a longitudinal edge of the plate-shaped element 5 on the one hand and the intermediate wall 3a or 3c on the other. Thus, the plate-shaped element 5 is bounded along two opposite edges by the plate-shaped members 6, while the other two edges terminate in free space.

The plate-shaped members 6 further serve for bearing-mounting a shaft 7, which is arranged centrally above the plate-shaped element 5 and hence centrally in the discharge aperture 4. On the side of recess 1c, the shaft 7 comprises an L-shaped extension 7a which extends vertically downwards in the neutral position, as indicated in Fig. 3 with a chain-dotted line.

Mounted on the part of the shaft 7 that extends between the two plate-shaped members 6 is a pushing member in the form of a pushing plate 7b having a height virtually equal to the distance between the shaft 7 and the upper surface 5a of the plate-shaped element 5 and a width virtually equal to the distance between the two plate-shaped members 6. The plate is mounted on the shaft 7 in such a manner that it extends vertically downwards as shown in Figs 1 and 3 when the extension 7 also extends in that direction. Pivoting the extension 7a therefore results in a proportionate pivoting motion of the pushing plate 7b.

Adjacent the back wall 1b of the housing, the shaft 7 comprises a wing 8, which, as shown in Fig. 3, is arranged symmetrically on the shaft 7 and extends horizontally when the extension 7a extends vertically downwards. Arranged at a distance above the wing 8 is a block 9 which, by contact with the wing 8, limits the angle through which the shaft 7 can rotate. The block 9 is mounted for height adjustment by means of a spindle 10, a bearing block 11 and a button 12, permitting adjustment of the angle of rotation of shaft 7. Mounted further on the shaft 7 are a plurality of pin-shaped elements 13, which in pairs form a V-shape, as shown in Fig. 3.

Arranged on the intermediate walls 3b and 3d is a plate 14 of a width equal to that of the discharge aperture 4. The plates 14 are adjustably connected to the intermediate walls, in such a way that the free lower edges of the plates can extend into the discharge aperture 4 to a greater or lesser extent, thereby enabling adjustment of the free passage of the discharge aperture 4 as required.

Bearing-mounted in the hopper is a further shaft 15, spaced above shaft 7 and extending transversely thereto, to which a plate-shaped member 17 with apertures 18 is secured by means of a connecting piece 16. Secured further to the shaft 15 is a two-armed lever 19 having one arm extending through a slotted hole 20 in the intermediate wall 3a and, adjacent thereto, terminating at its free end in a grip member 19a extending transversely to the arm, as indicated by chain-dotted lines in Fig. 3. Acting on the free end of the other arm of the lever 19 is a pulling element 21 in which a spring 22 is mounted which continuously attempts to pull the lever 19 into the position shown in Fig. 1, which position is partly determined by the abutment of the lever 19 against the lower edge of the slotted hole 20. The stroke to be performed with the lever 19 is further determined by the upper edge of the slotted hole 20, which accordingly forms an ample aperture in the intermediate wall 3a. To prevent feed from falling through the slotted hole 20, the latter is covered by a plate-shaped member 23 which comprises an aperture which closely fits around the lever 19 and slides up and down over the intermediate wall 3a when the lever 19 is being displaced.

The plate-shaped member 17 further comprises a plurality of scraping fingers 17a which upon tilting of the plate-shaped member are moved through the area between the plate-shaped member and the front wall of housing 1. The scraping fingers 17a are made by punching E-shapes from a sheet of metal and mounting the web portion of the E-shape on the plate-shaped member 17 with the legs of the E-shape being flanged upwardly.

Further, there is provided a water pipe 24 running externally of the housing to a level just above the feeding trough, where the water pipe 24 is passed through the housing wall 1a and terminates in a nipple 25 with a non-return valve.

The operation of the device is as follows. When the hopper has been filled with feed, an amount of feed will have fallen through discharge aperture 4 onto the plate-shaped element 5. When an animal wants an amount of feed to drop from the plate-shaped element 5 down into the feeding trough 2, it must, for instance by means of its snout, push the extension 7a of the shaft 7 to the left or to the right. The pushing plate 7b will then pivot to the right or to the left and move a certain amount of feed from the upper surface 5a so that it drops over the free terminal edges of the plate-shaped element into the feeding trough 2, where the animal, if so desired, can mix the feed with water by depressing the non-return valve of the nipple 25. To obtain a next portion of feed, the animal must push the extension 7a in the opposite direction.

In this manner, a particularly reliable feed supply can be realized which cannot jam as a result of feed being trapped and accumulating on one side of the pushing plate, nor is the proper operation dependent on other forces than those exerted on the extension by the animal.

Disturbance of the feed supply may further be caused by bridging or clotting of the feed within the hopper. To reduce this risk, advantageous use can be made of the fact that a portion of shaft 7 is in direct contact with the feed. To that end, pin-shaped members 13 are mounted on the shaft 7, which members 13 move in correspondence with shaft 7 during its pivoting motion and thereby prevent bridging and clotting, at least within their reach.

The plate-shaped member 17 pivotally mounted at a distance above the shaft 7, is provided to further remove the above-mentioned causes of disturbance of the feed supply. If, for instance, bridging occurs beyond the reach of the pin-shaped members 13, then at some point the operation of the extension 7a will no longer result in the supply of feed. Experiments have demonstrated that the animal will then look for other options. In that event it will encounter the grip member 19a of the lever 19 and push it up, with the result that the tilting plate-shaped member 17 with scraping fingers 17a will shake the feed loose and thereby disturb the formation of bridges. After the lever 19 has been released, it will be urged back into its initial position by the force of the spring 22.

When the lever 19 is being displaced, the plate 23 slides over the intermediate wall 3a, which has a further favourable effect on the disturbance of bridging.

Depending on the contents of the hopper and the nature of the feed, it is also possible to provide for a continuous loosening of the feed in the hopper by coupling the plate-shaped member directly to the shaft. One such embodiment is shown in Fig. 4.

Fig. 4 again shows a shaft 7 with extension 7a and projections 13 extending into the feed supply and a plate-shaped member 17 which is pivotable about a further shaft 15 and is connected thereto by means of a connecting piece 16. Here, however, the plate-shaped member 17 and a projection 13 are connected by a hinge rod 26, so that upon each pivotal motion of shaft 7, the plate-shaped member is tilted and the feed in the hopper is shaken loose.

It goes without saying that within the framework of the invention, many modifications and variants are possible. Thus, the pushing plate could for instance be a rod-shaped part of the pivotal shaft, bent or formed on the shaft in correspondence with the outer contour of the pushing plate. It will also be clear that the housing may have many different shapes, such as an oval or round shape, while various constructional details regarding the shape and design of the extension, the various adjusting mechanisms, the projections for shaking loose the feed, etc., and the configuration and arrangement of the plate-shaped member and the apertures therein can be varied *ad infinitum*.

## Claims

1. An animal feeding device with dispensing means operable by an animal, which device comprises a hopper for free-flowing feed such as feed in granular or powdered form, which hopper is arranged above a feeding trough (2) and provided in its bottom surface with a discharge aperture (4) with walls (3a-d) sloping towards said discharge aperture (4), as well as an element (5) spaced below said discharge aperture (4), whose upper surface (5a) covers and overlaps the discharge aperture (4), above which element (5) a substantially horizontally extending shaft (7) is rotatably bearing-mounted, which shaft (7) can be driven by an animal by means of a member (7a) connected to said shaft (7) and extending beyond the hopper, a pushing member (7b) for pushing the feed from the element (5) towards the feeding trough (2), said pushing member (7b) being mounted perpendicularly to said shaft (7) and having in radial direction relative to the shaft (7) a height which is substantially equal to the perpendicular distance between the shaft (7) and the upper surface (5a) of the element (5), characterized in that the shaft (7), seen in top plan view, extends along a line dividing the discharge aperture (4) into two substantially equal passages and is extended at one end with a member (7a) connecting thereto in L-shaped configuration, which member (7a) extends substantially vertically downwards and is to be pivoted to the left and to the right by an animal, the upper surface (5a) of the element (5) terminating in two free edges substantially parallel to each other and to the shaft (7), from which edges feed can fall into the feeding trough (2).

2. A feeding device according to claim 1, characterized in that the shaft (7) at its other end comprises a wing (8) extending on opposite sides, which wing (8) extends substantially horizontally when the L-shaped extension (7a) extends vertically downwards, a block (9) being adjustably mounted above the wing (8), with which block (9) the wing parts extending to the left and the right of the shaft (7) can come into contact.

3. A feeding device according to claim 1 or 2, characterized in that the discharge aperture (4) of the hopper comprises two opposite edges extending substantially parallel to the shaft and each being part of a plate (23) forming an adjustable part of the bottom surface of the hopper.

4. A feeding device according to any one of the preceding claims, characterized in that pin-, plate-, strip-, or rod-shaped elements (13) extend from the shaft (7) into the interior of the hopper, which elements (13) are fixedly connected to the shaft (7).

5. A feeding device according to any one of the preceding claims, characterized in that within the hopper above the shaft (7) a substantially plate-shaped member (17;23) is arranged, which member can be moved by an element (19;7a) which can be operated by an animal, which element (19;7a) is coupled with the plate-shaped member (17;23) and extends beyond the hopper.

6. A feeding device according to claim 5, characterized in that said element (7a) is a substantially downwardly extending L-shaped extension (7a) of the shaft (7) and the plate-shaped member (17) is provided with apertures (18), is arranged substantially horizontally and is connected to the shaft (7) by means of pin-, plate-, strip-, or rod-shaped elements (13, 26) .

7. A feeding device according to claim 5, characterized in that said element is a lever (19) which can be displaced by an animal from an inoperative position, which lever (19) is connected to a further shaft (15), bearing-mounted in the hopper, and is urged into the inoperative position by spring (21) force, the part (19a) of the lever (19) to be operated by an animal being less accessible than the member (7a) driving the first shaft (7).

8. A feeding device according to claim 7, characterized in that the plate-shaped member is a plate (23) which is arranged on, and in surface-to-surface contact with, a hopper bottom wall (3a) sloping towards the discharge aperture (4) and can be shifted to and fro over this bottom wall (3a) by displacing the lever (19).

9. A feeding device according to claim 7, characterized in that the plate-shaped member is a substantially horizontally extending apertured plate (17) which is fixedly connected to the further shaft (15) and is tilted together with the further shaft (15) by displacing the lever (7a;19).

10. A feeding device according to claim 9, characterized by pin-, plate-, strip-, or rod-shaped elements (17a) extending from the plate (17).

11. A feeding device according to claim 7, characterized by a plate-shaped member in the form of a plate (23) which is disposed on, and in surface-to-surface contact with, a hopper bottom wall (3a) sloping towards the discharge aperture (4) and can be shifted to and fro over this bottom wall by displacing the lever (19), as well as a plate-shaped member in the form of a substantially horizontally extending apertured plate (17) which may or may not be provided with pin-, plate-, strip-, or rod-shaped elements (17a), which plate (17) is fixedly connected to the further shaft (15) and is tilted together with the further shaft (15) by displacing the lever (19).

12. A feeding device according to any one of claims 7-11, characterized in that the lever is a lever (19) that can be pushed up from the inoperative position by an animal, this lever (19) being disposed substantially in the same plane as the first shaft (7) with L-shaped extension (7a), and that the further shaft (15) extends transversely to the first shaft (7), the lever (19) being extended beyond the further shaft (15) and a spring member (21) acting on the free end of said extension, said spring member (21) at all times urging the lever (19) towards its downward inoperative position, the other free end of the lever (19) to be operated by an animal terminating some distance above the free end of the L-shaped extension (7a) and being at that point provided with a grip member (19a) extending transversely to the lever (19) and substantially parallel to the further shaft (15).

## Patentansprüche

1. Eine Tierfütterungseinrichtung mit von einem Tier betätigbarem Ausgabemittel, welche Einrichtung einen Trichter für freifließendes Futter, wie Futter in körniger oder pulverisierter Form umfaßt, welcher Trichter über einem Fütterungstrog (2) angeordnet und in seiner Bodenfläche mit einer Entladungsöffnung (4) mit Wänden (3a-d), die sich nach der Entladungsöffnung (4) zu neigen, wie auch mit einem unter der Entladungsöffnung (4) mit Zwischenraum angeordneten Element (5), dessen obere Oberfläche (5a) die Entladungsöffnung (4) abdeckt und überlappt, versehen ist, über welchem Element (5) ein sich im wesentlichen horizontal erstreckender Schaft (7) drehbar lagermontiert ist, welcher Schaft (7) von einem Tier mittels eines Teils (7a) angetrieben werden kann, das mit dem Schaft (7) verbunden ist und sich über den Trichter hinaus erstreckt, ein Schiebeteil (7b) zum Schieben des Futters von dem Element (5) nach dem Fütterungstrog (2) zu, wobei das Schiebeteil (7b) senkrecht zu dem Schaft (7) angebracht ist und in radialer Richtung relativ zu dem Schaft (7) eine Höhe hat, welche im wesentlichen gleich dem senkrechten Abstand zwischen dem Schaft (7) und der oberen Oberfläche (5a) des Elements (5) ist, dadurch **gekennzeichnet**, daß der Schaft (7), gesehen in der Aufsicht von oben, sich längs einer Linie erstreckt, die die Entladungsöffnung (4) in zwei im wesentlichen gleiche Durchgänge teilt, und an einem Ende mit einem Teil (7a) verlängert ist, das sich damit in L-förmiger Konfiguration verbindet, welches Teil (7a) sich im wesentlichen vertikal nach abwärts erstreckt und von einem Tier nach links und nach rechts zu verschwenken ist, wobei die obere Oberfläche (5a) des Elements (5) in zwei freien Rändern endet, die im wesentlichen parallel zueinander und zu dem Schaft (7) sind, von welchen Rändern Futter in den Fütterungstrog (2) fallen kann.

2. Eine Fütterungseinrichtung gemäß Anspruch 1, dadurch **gekennzeichnet,** daß der Schaft (7) an seinem anderen Ende einen Flügel (8) umfaßt, der sich auf entgegengesetzten Seiten erstreckt, welcher Flügel (8) sich im wesentlichen horizontal erstreckt, wenn sich die L-förmige Verlängerung (7a) vertikal nach abwärts erstreckt, wobei ein Block (9) einstellbar oberhalb des Flügels (8) angebracht ist, mit welchem Block (9) die Flügelteile, die sich nach links und rechts des Schafts (7) erstrecken, in Kontakt kommen können.

3. Eine Fütterungseinrichtung gemäß Anspruch 1 oder 2, dadurch **gekennzeichnet**, daß die Entladungsöffnung (4) des Trichters zwei gegenüberliegende Ränder umfaßt, die sich im wesentlichen parallel zu dem Schaft erstrecken und jeder Teil einer Platte (23) ist, die einen einstellbaren Teil der Bodenfläche des Trichters bildet.

4. Eine Fütterungseinrichtung gemäß irgendeinem der vorhergehenden Ansprüche, dadurch **gekennzeichnet**, daß sich stift-, platten-, streifen- oder stabförmige Elemente (13) von dem Schaft (7) in das Innere des Trichters erstrecken, welche Elemente (13) fest mit dem Schaft (7) verbunden sind.

5. Eine Fütterungseinrichtung gemäß irgendeinem der vorhergehenden Ansprüche, dadurch **gekennzeichnet**, daß innerhalb des Trichters oberhalb des Schafts (7) ein im wesentlichen plattenförmiges Teil (17; 23) angeordnet ist, welches Teil mittels eines Elements (19; 7a) bewegt werden kann, welches von einem Tier betätigt werden kann, welches Element (19; 7a) an das plattenförmige Teil (17; 23) angekoppelt ist und sich über den Trichter hinaus erstreckt.

6. Eine Fütterungseinrichtung gemäß Anspruch 5, dadurch **gekennzeichnet**, daß das Element (7a) eine sich im wesentlichen nach abwärts erstreckende L-förmige Verlängerung (7a) des Schafts (7) ist und das plattenförmige Teil (17) mit Öffnungen (18) versehen, im wesentlichen horizontal angeordnet und mit dem Schaft (7) mittels stift-, platten-, streifen- oder stabförmigen Elementen (13; 26) verbunden ist.

7. Eine Fütterungseinrichtung gemäß Anspruch 5, dadurch **gekennzeichnet**, daß das Element ein Hebel (19) ist, welcher von einem Tier aus einer inoperativen Position verlagert werden kann, welcher Hebel (19) mit einem weiteren Schaft (15) verbunden, in dem Trichter lagermontiert ist und mittels Feder(21)kraft in die inoperative Position gedrängt wird, wobei der Teil (19a) des Hebels (19), der von einem Tier zu betätigen ist, weniger zugänglich ist als das Teil (7a), das den ersten Schaft (7) antreibt.

8. Eine Fütterungseinrichtung gemäß Anspruch 7, dadurch **gekennzeichnet**, daß das plattenförmige Teil eine Platte (23) ist, welche auf und in Oberfläche-zu-Oberfläche-Kontakt mit einer Trichterbodenwand (3a), die sich nach der Entladungsöffnung (4) zu neigt, angeordnet ist und über diese Bodenwand (3) durch Verlagern des Hebels (9) hin-und herverschoben werden kann.

9. Eine Fütterungseinrichtung gemäß Anspruch 7, dadurch **gekennzeichnet**, daß das plattenförmige Teil eine sich im wesentlichen horizontal erstreckende, mit Öffnungen versehene Platte (17) ist, welche fest mit dem weiteren Schaft (15) verbunden ist und zusammen mit dem weiteren Schaft (15) durch Verlagern des Hebels (7a; 19) gekippt wird.

10. Eine Fütterungseinrichtung gemäß Anspruch 9, **gekennzeichnet** durch stift-, platten-, streifen- oder stabförmige Elemente (17a), die sich von der Platte (17) aus erstrecken.

11. Eine Fütterungseinrichtung gemäß Anspruch 7, **gekennzeichnet** durch ein plattenförmiges Teil in der Form einer Platte (23), welche auf und in Oberfläche-zu-Oberfläche-Kontakt mit einer Trichterbodenwand (3a), die sich nach der Entladungsöffnung (4) zu neigt, angeordnet ist, und über diese Bodenwand durch Verlagern des Hebels (19) hin- und herverschoben werden kann, wie auch ein plattenförmiges Teil in der Form einer sich im wesentlichen horizontal erstreckenden, mit Öffnungen versehenen Platte (17), welche mit stift-, platten-, streifen- oder stabförmigen Elementen (17a) versehen sein kann oder nicht sein kann, welche Platte (17) fest mit dem weiteren Schaft (15) verbunden ist und zusammen mit dem weiteren Schaft (15) durch Verlagern des Hebels (19) gekippt wird.

12. Eine Fütterungseinrichtung gemäß irgendeinem der Ansprüche 7 bis 11, dadurch **gekennzeichnet**, daß der Hebel ein Hebel (19) ist, der aus der inoperativen Position durch ein Tier nach aufwärts gedrückt werden kann, wobei dieser Hebel (19) im wesentlichen in der gleichen Ebene wie der erste Schaft (7) mit der L-förmigen Verlängerung (7a) angeordnet ist, so daß sich der weitere Schaft (15) quer zu dem ersten Schaft (7) erstreckt, wobei der Hebel (19) über den weiteren Schaft (15) hinaus verlängert ist und ein Federteil (21) auf das freie Ende der Verlängerung wirkt, wobei das Federteil (21) jederzeit den Hebel (19) nach seiner abwärtigen inoperativen Position zu drängt, wobei das andere freie Ende des Hebels (19), das von einem Tier zu betätigen ist, in einiger Entfernung über dem freien Ende der L-förmigen Verlängerung (7a) endet und an jenen Punkt mit einem Griffteil (19a) versehen ist, das sich quer zu dem Hebel (19) und im wesentlichen parallel zu dem weiteren Schaft (15) erstreckt.

## Revendications

1. Dispositif pour l'alimentation d'animaux, comportant un moyen distributeur pouvant être actionné par un animal, lequel dispositif comprend une trémie servant à recevoir une nourriture apte à s'écouler librement, par exemple une nourriture sous forme de granulés ou de poudre, cette trémie étant disposée au-dessus d'une auge d'alimentation (2) et comportant, dans sa surface inférieure, une ouverture d'évacuation (4) avec des parois (3a-d) s'inclinant en direction de ladite ouverture d'évacuation (4),
ainsi qu'un élément (5) situé à distance au-dessous de ladite ouverture d'évacuation (4) et dont la surface supérieure (5a) recouvre l'ouverture d'évacuation (4) étant en superposition avec celle-ci,
tandis qu'au-dessus de cet élément (5) est montée rotative, dans des paliers, une tige sensiblement horizontale (7), qui peut être actionnée par un animal au moyen d'un élément (7a) raccordé à ladite tige (7) et s'étendant au-delà de la trémie,
un poussoir (7b) servant à repousser la nourriture à partir de l'élément (5) en direction de l'auge d'alimentation (2), ledit poussoir (7b) étant monté perpendiculairement à ladite tige (7) et ayant, dans une direction radiale par rapport à la tige (7), une hauteur sensiblement égale à la distance, comptée perpendiculairement , entre la tige (7) et la surface supérieure (5a) de l'élément (5),
caractérisé en ce que, lorsqu'on regarde selon une vue en plan, la tige (7) s'étend le long d'une ligne qui partage l'ouverture d'évacuation (4) en deux passages sensiblement égaux et est prolongé à une extrémité par un élément (7a) qui lui est raccordé en constituant une configuration en forme de L, cet élément (7a) s'étendant sensiblement verticalement vers le bas, et étant destiné à pivoter vers la gauche ou vers le droite par l'action d'un animal,
la surface supérieure (5a) de l'élément (5) se terminant par deux bords libres sensiblement parallèles entre eux et à l'arbre (7) et à partir desquels la nourriture peut tomber dans l'auge d'alimentation (2).

2. Dispositif d'alimentation selon la revendication 1, caractérisé en ce que l'arbre (7) possède, à son autre extrémité, une aile (8) qui s'étend sur des côtés opposés et est sensiblement horizontale lorsque le prolongement formant un L (7a) s'étend verticalement vers le bas, un bloc (9) étant monté de façon réglable au-dessus de l'aile (8) et les parties de l'aile s'étendant vers la gauche et vers la droite de l'arbre (7) pouvant venir en contact avec ce bloc (9).

3. Dispositif d'alimentation selon la revendication 1 ou 2, caractérisé en ce que l'ouverture d'évacuation (4) de la trémie présente deux bords opposés qui sont sensiblement parallèles à la tige et font partie chacun d'une plaque (23) constituant une partie réglable de la surface inférieure de la trémie.

4. Dispositif d'alimentation selon l'une quelconque des revendications précédentes, caractérisé en ce que des éléments (13) en forme de tiges, de plaques, de bandes ou de barres s'étendent à partir de la tige (7), à I'intérieur de la trémie, lesquels éléments (13) sont raccordés de façon fixe à la tige (7).

5. Dispositif d'alimentation selon l'une quelconque des revendications précédentes, caractérisé en ce que dans la trémie et au-dessus de l'arbre (7) est disposé un élément sensiblement en forme de plaque (17;23), qui peut être déplacé par un élément (19;7a) susceptible d'être actionné par un animal, cet élément (19;7a) étant accouplé à l'élément en forme de plaque (17;23) et s'étendant au-delà de la trémie.

6. Dispositif d'alimentation selon la revendication 5, caractérisé en ce que ledit élément (7a) est un prolongement formant un L, qui s'étend sensiblement vers le bas, de l'arbre (7), et l'élément en forme de plaque (17) présente des ouvertures (18), est sensiblement horizontal, et est raccordé à la tige (7) au moyen d'éléments en forme de tiges, de plaques, de bandes ou de barres (13,26).

7. Dispositif d'alimentation selon la revendication 5, caractérisé en ce que ledit élément est un levier (19), qui peut être déplacé par un animal à partir d'une position inactive, ce levier (19) étant raccordé à une autre tige (15), qui est montée sur des paliers dans la trémie, et étant repoussé dans la position inactive par la force d'un ressort (21), la partie (19a) du levier (19) qui doit être actionnée par l'animal étant moins accessible que l'élément (7a) entraînant la première tige (7).

8. Dispositif d'alimentation selon la revendication 7, caractérisé en ce que l'élément en forme de plaque est une plaque (23) qui est disposée sur une paroi inférieure (3a) de la trémie, qui s'incline en direction de l'ouverture d' évacuation (4) et est en contact surface contre surface avec elle, cette plaque pouvant être déplacée en va-et-vient sur cette paroi inférieure (3a) sous l'effet du déplacement du levier (19).

9. Dispositif d'alimentation selon la revendication 7, caractérisé en ce que l'élément en forme de plaque est une plaque ajourée sensiblement horizontale (17), qui est raccordée de façon fixe à l'autre tige (15) et bascule avec l'autre tige (15), sous l'effet du déplacement du levier (7a;19).

10. Dispositif d'alimentation selon la revendication 9, caractérisé par des éléments en forme de tiges, de plaques, de bandes ou de barres (17a), qui s'étendent à partir de la plaque (17).

11. Dispositif d'alimentation selon la revendication 7, caractérisé par un élément en forme de plaque (23) qui est disposé sur une paroi inférieure (3a) de la trémie, qui est inclinée en direction de l'ouverture d'évacuation (4) et est en contact surface contre surface avec elle, cet élément pouvant être déplacé en va-et-vient au-dessus de cette paroi inférieure sous l'effet du déplacement du levier (19), ainsi que par un élément en forme de plaque, qui se présente sous la forme d'une plaque ajourée sensiblement horizontale (17), qui peut être ou non équipée d'éléments en forme de tiges, de plaques, de bandes ou de barres (17a), cette plaque (17) étant raccordée de façon fixe à l'autre arbre (15) et s'inclinant conjointement avec l'autre tige (15) sous l'effet du déplacement du levier (19).

12. Dispositif d'alimentation selon l'une quelconque des revendications 7-11, caractérisé en ce que le levier est un levier (19), qui peut être repoussé à partir de sa position inactive par un animal, ce levier (19) étant disposé sensiblement dans le même plan que la première tige (7) qui posséde un prolongement en formant un L (7a), et en ce que l'autre tige (15) s'étend transversalement par rapport à la première tige (7), le levier (19) s'étendant au-delà de l'autre tige (15), tandis qu'un élément de ressort (21) agit sur I'extrémité libre dudit prolongement, ledit élément de ressort (21) repoussant à tout moment le levier (19) en direction de sa position basse inactive, l'autre extrémité libre du levier (19), qui doit être actionnée par un animal, se terminant à une certaine distance au-dessus de l'extrémité libre du prolongement formant un L (7a) et portant, en cet endroit, un organe de prise (19a) qui s'étend transversalement par rapport au levier (19) et est sensiblement parallèle à l'autre tige (15).
